# EUROPÄISCHE PATENTSCHRIFT

(11) **EP 2 396 102 B1**
(45) Veröffentlichungstag und Bekanntmachung des Hinweises auf die Patenterteilung: **06.05.2015**
(21) Anmeldenummer: 10701135.5
(22) Anmeldetag: 20.01.2010
(51) Int. Cl.: B01D 50/00, B01D 46/52, B01D 46/24, B01D 46/00

(54) **FILTERSYSTEM**
FILTER SYSTEM
SYSTÈME FILTRANT

(30) Priorität: 11.02.2009 DE 102009008450
(43) Veröffentlichungstag der Anmeldung: 21.12.2011
(60) Teilanmeldung: 15154844.3
(73) Patentinhaber: MANN + HUMMEL GMBH, 71638 Ludwigsburg (DE)
(72) Erfinder: RUHLAND, Klaus-Dieter, 67149 Meckenheim (DE); KAUFMANN, Michael, 67149 Meckenheim (DE)
(86) Internationale Anmeldenummer: PCT/EP2010/050615
(87) Internationale Veröffentlichungsnummer: WO 2010/091917

(56) Entgegenhaltungen:
- WO-A1-2009/047196
- WO-A1-2009/146962
- DE-U1- 29 522 112
- US-A1- 2002 116 909
- US-A1- 2006 254 229

## Beschreibung

### Technisches Gebiet

Die Erfindung betrifft ein Filtersystem, insbesondere für die Ansaugluft einer Brennkraftmaschine.

### Stand der Technik

Zylindrische Faltenfilter mit Endscheiben, die Dichtungswülste aufweisen, sind beispielsweise aus der US 2006/254229 A1, DE 295 22 112 U1 oder US 2002/116909 A1 bekannt.

Aus der WO 2009/047196 A1 ist ein Filterelement mit einem ersten Ringwulst und einem zweiten Ringwulst bekannt.

Aus der US 4,720,292 ist ein Luftfilter mit folgenden Merkmalen bekannt: ein Gehäuse mit einer axialen Auslauföffnung und einem im Wesentlichen offenen, zweiten Ende, das durch eine entfernbare Abdeckung verschließbar ist. Am Umfang des Gehäuses ist eine Lufteinlassöffnung angeordnet. Im Gehäuse befindet sich ein im Wesentlichen zylindrisches Filterelement mit einem inneren Stützrohr, einem Filter mit einem äußeren Stützrohr, wobei das Filterelement in dem Gehäuse koaxial angeordnet ist. Die Abdichtung des Filterelements an dem Gehäuse erfolgt über eine ringförmige Endscheibe, die eine im Wesentlichen zylindrische, radial einwärts gerichtete Oberfläche aufweist und über einen inneren Abschnitt des Auslassteils geschoben wird.

Bekanntlicherweise werden die Filtereinsätze von Luftfiltern nach einer bestimmten Betriebszeit ausgetauscht. Je nach Staubanfall kann die Standzeit eines Luftfilters wenige Tage (Baumaschinen) bis zu mehreren Monaten betragen.

Der aus der oben genannten US-Schrift bekannte Filtereinsatz sowie andere üblicherweise verwendete Filtereinsätze bestehen aus einer Kombination von Werkstoffen, wobei insbesondere für die Stützrohre Stahlblech oder Kunststoff verwendet wird. Das Filtermedium ist Papier oder ein Kunststoffvlies. Die Endscheiben bestehen aus Kunststoff, beispielsweise aus einem Weichelastomer.

Gerade bei einem häufigen Austausch von Filterelementen ist die zuverlässige und prozesssichere Abdichtung des Filterelements in einem Gehäuse wichtig. Die Abdichtung soll temperaturbeständig und rüttelfest ausgeführt sein. Auch an Anlagen oder Einrichtungen, die starken Schwingungen oder Erschütterungen ausgesetzt sind, muss die Abdichtung des Filterelements gewährleistet sein. Gleichzeitig soll aber das Filterelement selbst möglichst keine metallischen Elemente aufweisen, damit es problemlos thermisch entsorgt werden kann.

### Offenbarung der Erfindung

Der Erfindung liegt deshalb die Aufgabe zugrunde, ein Filtersystem mit einer hohen Filtrationseigenschaft und einer zuverlässigen Abdichtung zwischen dem Bereich des unfiltrierten und dem Bereich des filtrierten Mediums zu schaffen. Diese Aufgabe wird durch die Merkmale des Hauptanspruchs gelöst.

Der wesentliche Vorteil der Erfindung liegt darin, dass durch die Ausgestaltung der Dichtungen des Filterelements mit zwei ringwulstförmigen Anordnungen und einer dazwischen liegenden Dichtungsnut gewährleistet ist, dass einerseits eine hohe Abdichtwirkung und andererseits eine gute Abstützung des Filterelements in einem Gehäuse erzielt wird. Gerade bei der Verwendung von Kunststoff für die Abdichtung an schwingungsbelasteten Elementen ist eine Gestaltung erforderlich, die auch bei extremen Temperaturschwankungen zuverlässig arbeitet.

Gemäß der Erfindung kann das Gehäuse auch Kanäle aufweisen, die an der ebenen Fläche, an welcher der Ringwulst aufliegt, angeordnet sind. Diese Kanäle haben beispielsweise die Aufgabe, Staub abzuleiten.

Gemäß einer weiteren Ausgestaltung der Erfindung besteht die Endscheibe, welche die Dichtung trägt, aus einem Polyurethan. Selbstverständlich besteht auch die Möglichkeit, die Endscheibe aus einem Weichelastomer oder aus mehreren Komponenten, z. B. im Montagespritzverfahren, herzustellen, wobei die Komponente, die die Dichtung bildet, aus einem Elastomer besteht und die Komponente, die die Verbindung zu dem Filtermedium herstellt, ein thermoplastischer Kunststoff ist. Dieser kann mit dem Filtermedium verschweißt oder verklebt sein.

In einer weiteren Ausgestaltung der Erfindung ist vorgesehen, dort an dem Filtersystem Staubkanäle anzuordnen, wo es erforderlich ist, die Dichtflächen, die mit dem Filterelement in Verbindung stehen, staubfrei zu halten.

Weiterbildungsgemäß können Rippen, an dem das filteraufnehmende Gehäuse oder auch auf einem Steg angeordnet sein. Es besteht auch die Möglichkeit, Rippen und/oder Nuten dort am Gehäuse anzuordnen, wo diese Abstützung oder die Durchleitung von bestimmten Stoffen durch die Nuten erforderlich ist.

Die Erfindung betrifft ein Filtersystem mit einem Filterelement. Dieses Filtersystem dient insbesondere der Filtrierung der Ansaugluft einer Brennkraftmaschine und besteht aus einem Gehäuse und einem Deckel zur Aufnahme des Filterelementes. Erfindungsgemäß ist das Filtersystem mit zwei Ringnuten ausgestattet, die im Bereich der Abdichtung mit den Dichtkonturen des Filterelementes kommunizieren. Gleichzeitig sind in diesem Bereich zusätzliche Stützstege oder Nuten vorgesehen, die sich beispielsweise radial erstrecken und eine Abstützung oder eine Durchlassöffnungsfunktion besitzen.

Diese und weitere Merkmale gehen nicht nur aus den Ansprüchen, sondern auch aus der Figurenbeschreibung und den Figuren hervor.

### Kurze Beschreibung der Zeichnungen

Die Erfindung wird nachfolgend anhand eines Ausführungsbeispiels näher erläutert. Es zeigt:
Figur 1 einen Schnitt durch ein Filtersystem,
Figur 1a eine Detailansicht aus Figur 1 und
Figur 2 die Detaildarstellung im Dichtungsbereich des Filtergehäuses.

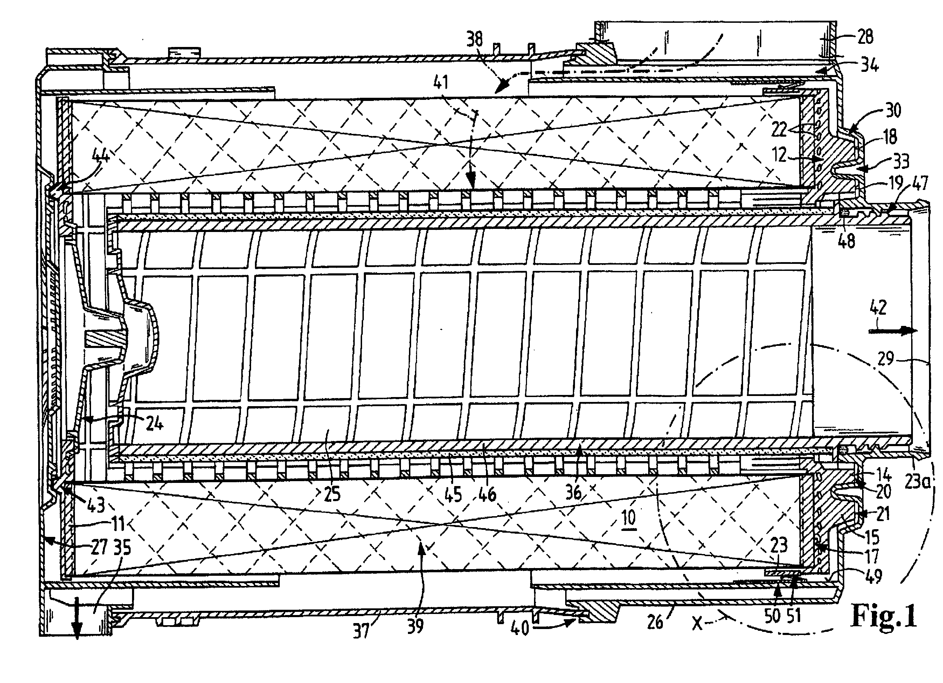

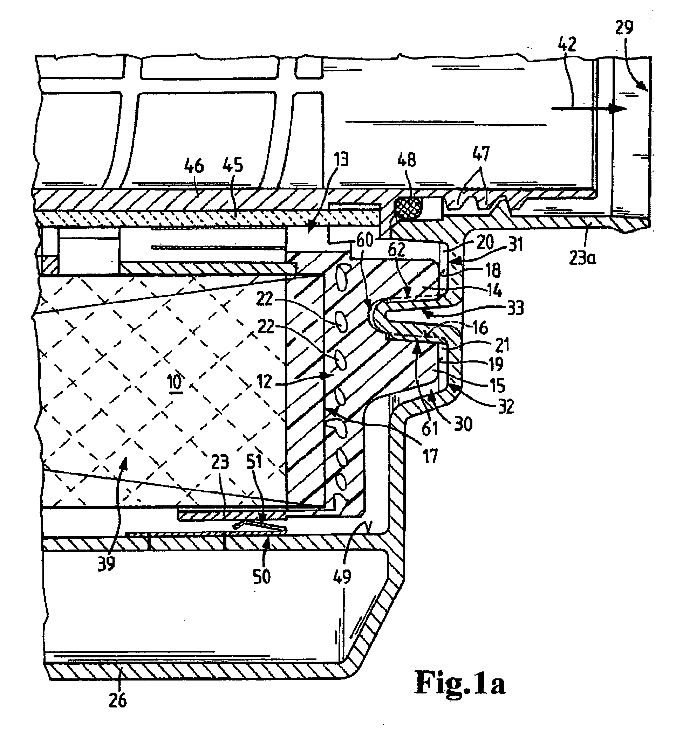

Das Filtersystem gemäß Figur 1 besteht aus einem Gehäuse 26, welches im Wesentlichen konzentrisch aufgebaut ist und einen Einlass 28 aufweist. Das Filtersystem dient zur Filterung der Ansaugluft einer Brennkraftmaschine. Über den Einlass 28 wird die zu reinigende Luft gemäß dem Pfeil 38 zugeführt, strömt durch einen Zyklonvorabscheider 34 und wird dort in eine Drehströmung versetzt. Aufgrund dieser Drehströmung gelangen Partikel, die sich in der Luft befinden, an die Gehäuseaußenwand und werden von dort über einen Schmutzauslass 35, der über ein geeignetes Ventil verschlossen werden kann, nach außen getragen.

### Ausführungsform(en) der Erfindung

Am Gehäuse 26 ist ein Mittelstück 37 angeordnet. Dieses ist ebenfalls konzentrisch gestaltet und mit dem Gehäuse im Bereich 40, beispielsweise über eine Schweißverbindung, gekoppelt. Am Mittelstück 37 befindet sich ein Deckel 27. Dieser ist mit dem Mittelstück über Spannverschlüsse oder ein anderes geeignetes Verschlusssystem lösbar verbunden. Deckel, Mittelstück und Gehäuse stellen somit ein geschlossenes System dar, welches einen Auslass 29 zum Ableiten der gereinigten Luft aufweist.

Innerhalb des Gesamtsystems befindet sich ein Filterelement 39. Dieses besteht aus einem zickzackförmig gefalteten Filtermedium 10 und ist in konzentrischer Form aufgebaut. An den Stirnseiten besitzt das Filterelement 39 Endscheiben 11, 12. Während eine Endscheibe 12 eine konzentrische Öffnung 13 aufweist, ist die weitere Endscheibe 11 mit einem Verschlussstück 24 verschlossen. Es besteht auch die Möglichkeit die weitere Endscheibe mit einer konzentrischen Öffnung zu versehen, die durch einen Stutzen am Deckel 27 verschlossen wird. Die zu reinigende Luft strömt gemäß dem Pfeil 41 durch das Filterelement hindurch und gemäß Pfeil 42 gereinigt über den Auslass 29 zu einer hier nicht dargestellten Brennkraftmaschine. Das Filterelement besitzt an der rechtsseitig angeordneten Endscheibe 12 einen ersten Ringwulst 14 und einen zweiten Ringwulst 15. Dazwischen befindet sich eine Dichtungsnut 16.

Innerhalb der Endscheibe 12 ist eine Verstärkungsplatte 17 vorgesehen. Diese weist Durchbrüche 22 auf. Die Verstärkungsplatte ist im äußeren Bereich, das heißt außerhalb des Dichtungsmassenbereichs, mit einer Ringfläche 23 versehen. Diese dient zur Abschirmung des Filtermediums oder des Elements beim Montieren oder Ausklopfen oder sonstigem manuellen Handhaben.

Sowohl Ringwulst 14 als auch Ringwulst 15 stoßen an Rippen 20, 21 an und definieren damit die axiale Lage des Filterelements im Gehäuse.

In einer alternativen Ausgestaltung, die nicht auf dieses Beispiel beschränkt ist, kann die Lage des Filterelementes durch das Eingreifen der Ringwülste 14 und 15 in Ringnuten 31 und 32 definiert werden - ohne ein Anstoßen an die Rippen 20, 21. Alternativ können auch andere Punkte zur zusätzlichen axialen und/oder radialen Fixierung verwendet werden.

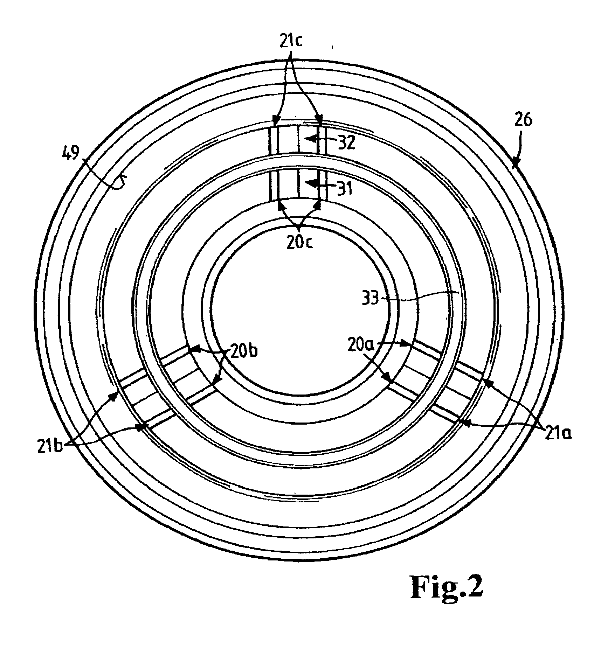

Die Rippen sind in Figur 2 näher dargestellt, es handelt sich um so genannte Doppelrippen, das heißt zwei benachbart liegende Rippen 20a, 20b , 20c, die im Nutgrund der Ringnut 31 und im Nutgrund der Ringnut 32 angeordnet sind und beispielsweise eine Höhe von 3 bis 6 mm aufweisen.

Der Dichtungssteg 33 ist im oberen Bereich mit einer oder mehreren Nuten oder Stegen versehen. Es besteht auch die Möglichkeit, wie mit der Bezugsziffer 61 angedeutet, einen Steg 61 zusätzlich an der einen Seite des Dichtungsstegs 33 vorzusehen oder, wie mit der Bezugsziffer 62 angedeutet, eine Nut am Steg 33 vorzusehen. Selbstverständlich ist grundsätzlich darauf zu achten, dass eine umlaufende Dichtung des Filterelementes im Gehäuse gewährleistet ist. Sowohl die dargestellten Stege als auch die Nuten sind lediglich Beispiele, um eine Abstützung an bestimmten Positionen, und zwar eine Abstützung des Filterelementes, oder eine Kanalgestaltung, die zur Ableitung von Schmutz oder ähnlichem zweckmäßig ist.

Die dargestellten Merkmale in Figur 2 können auch Nuten 20a, 20b, 20c oder 21a, 21b, 21c sein, die in beliebiger Anordnung im Dichtbereich angeordnet sind. Das Filterelement stützt sich zuverlässig im Dichtbereich ab. Eine Anordnung von Rippen verhindert ein Rotieren des Filterelementes bei Querfrequenzanregung. Die Dichtungsstruktur verbessert gleichzeitig die gesamte Verbindung zwischen dem Gehäuse und dem Filterelement.

Der Dichtungssteg 33, der sich zwischen den beiden Ringnuten befindet weist an seinen Flanken den Dichtungsbereich auf, hier dichtet die Endscheibe 12 mit ihrer Dichtungsnut 16 ab. Es besteht somit ein Doppeldichtungsprinzip über diese beiden Flanken. Die Dichtungsnut 16 ist geringfügig tiefer als der Dichtungssteg 33, so dass eine gewisse axiale Toleranz in diesem Bereich möglich ist. Wie bereits erwähnt, besteht die Endscheibe aus einem Polyurethanschaum oder einem anderen Elastomer, dessen Härte derart bemessen ist, dass sie einerseits die erforderlichen Dichtkräfte aufbringt, andererseits aber auch für eine gute Positionierung des Filterelements im Filtergehäuse sorgt. Durch die Zweiflankendichtung und die Abstützung der Ringwülste 14, 15 auf den Rippen 20 ist eine relativ geringe Montagekraft und auch eine geringe Lösekraft zum Austausch eines Filterelements erforderlich.

In einer alternativen Ausführungsform, die nicht auf dieses Beispiel beschränkt ist, hat der Dichtungssteg 33 an seinem axialen Ende einen zusätzlichen Dichtwulst, z. B. eine ringförmig, auf dem Dichtungssteg 33 verlaufende, axial ins Gehäuseinnere gerichtete Struktur. Hierdurch kann eine zusätzliche axiale Abdichtung erreicht werden, ohne Einfluss auf die Anpresskraft beim Einbau des Filterelementes ins Filtergehäuse. Dies kann z. B. durch einen gegenüber dem Dichtungssteg 33 dünnen Dichtwulst geschehen.

Die Endscheibe 11 ist mit Stütznasen 43, 44 versehen. Diese stützen sich an dem Deckel 27 ab und sorgen damit für eine ausreichend axiale Kraft in Richtung Endscheibe 12 und damit für eine zuverlässige Abdichtung. In der Endscheibe 12 ist ein Verschlussstück 24 eingebettet. Dieses trennt den Rohluftraum von dem Reinluftraum. Innerhalb des Filterelements befindet sich ein Sekundärelement 36, das den Innenraum 25 umgibt. Die gereinigte Luft strömt durch das Sekundärelement hindurch, welches üblicherweise eine Vliesauflage 45 besitzt. Die Vliesauflage ist auf einem thermoplastischen oder metallischen Grundkörper 46 befestigt. Das Sekundärelement 36 ist über ein Schraubgewinde 47 an dem Auslassstutzen des Auslasses 29 befestigt und gleichzeitig über einen O-Ring 48 in diesem Bereich abgedichtet.

Das Gehäuse 26 ist mit einer Innenwand 49 versehen. Diese Innenwand weist einen geringen Abstand zu der Ringfläche 23 auf. An dieser Innenwand ist ein Spannelement 50 vorgesehen.

Dieses Spannelement besteht aus einem Federstahl, der an mehreren Stellen ausgeformt ist und in den Einbauraum des Filterelements vorsteht. Die ausgeformten Stellen sind in Figur 1 zu erkennen und mit der Bezugsziffer 51 versehen. Beim Einbauen des Filterelements werden die ausgeformten Stellen nach außen gedrückt und dienen zur Zentrierung des Filterelements. Sofern ein Filterelement ohne die Ringfläche 23 in das Gehäuse eingesetzt wird, besteht keine Möglichkeit der Zentrierung des Filterelements. In diesem Fall würden unter Umständen das Filterelement bzw. das Filtermedium beschädigt. Damit dient das Spannelement als Schutz gegen den unbeabsichtigten Einbau eines falschen oder fehlerhaften Filterelementes.

## Patentansprüche

1. Filtersystem, umfassend
- ein Filterelement, bestehend aus einem zickzackförmig gefalteten Filtermedium (10) in konzentrischer Form, einer ersten an einer Stirnseite angeordneten offenen oder geschlossenen Endscheibe (11) und einer zweiten an der gegenüberliegenden Stirnseite angeordneten Endscheibe (12), wobei die Endscheibe (12) eine konzentrische Öffnung (13) aufweist und sich im Wesentlichen kreisringförmig über die Falten des Filtermediums erstreckt, wobei die Endscheibe (12) einen ersten sich axial nach außen erstreckenden Ringwulst (14) sowie eine Dichtungsnut (16) aufweist, wobei der Ringwulst (14) äußere Stirnflächen (18, 19) aufweist,
- ein Gehäuse (26), welches im Wesentlichen konzentrisch aufgebaut ist,
- einen das Gehäuse (26) verschließenden Deckel (27), der ebenfalls konzentrisch aufgebaut ist,
- einen am Gehäuse und/oder Deckel angeordneten Einlass (28) zum Zuführen des zu filternden Mediums, insbesondere Luft,
wobei am Gehäuse (26) konzentrisch ein Auslass (29) zur Ableitung des gefilterten Mediums vorgesehen ist,
wobei am Gehäuse im Bereich des Auslasses (29) eine Dichtungskontur vorgesehen ist, die mit dem Ringwulst (14, 15) und der Dichtungsnut (16) korrespondiert, wobei die Dichtungskontur aus zwei konzentrisch verlaufenden Ringnuten (31, 32) und einem zwischen den beiden Ringnuten angeordneten umlaufenden Dichtungssteg (33) besteht, wobei die Ringnuten am Nutgrund Rippen (20, 21) und/oder Nuten aufweisen und der Dichtungssteg (33) an der Stegoberseite und/oder an der Stegseite Rippen und/oder Nuten und eine Höhe aufweist, die geringer ist als die der Dichtungsnut (16) des Filterelementes, wobei sich die äußeren Stirnflächen (18, 19) des Ringwulstes (14) an radial verlaufenden Rippen (20, 21) eines das Filterelement aufnehmenden Gehäuses oder einer ebenen Fläche mit Kanälen abstützt.

2. Filtersystem nach Anspruch 1, **dadurch gekennzeichnet, dass** das Gehäuse im Bereich des Nutgrundes der Dichtungsnut (16) wenigstens eine Rippe (60) aufweist.

3. Filtersystem nach Anspruch 1, **dadurch gekennzeichnet, dass** die Kanäle des aufnehmenden Gehäuses Staubkanäle sind, um ein Austreten von fehlgeleitetem Staub zu ermöglichen.

4. Filtersystem nach einem der vorhergehenden Ansprüche, **dadurch gekennzeichnet, dass** die Endscheibe (12) aus einem Polyurethanschaum oder einem Elastomer besteht.

5. Filtersystem nach einem der vorhergehenden Ansprüche, **dadurch gekennzeichnet, dass** innerhalb der Endscheibe eine Verstärkungsplatte (17) vorgesehen ist, die Durchbrüche (22) aufweist.

6. Filtersystem nach einem der vorhergehenden Ansprüche, wobei die Verstärkungsplatte (17) im äußeren Bereich mit einer Ringfläche (23) versehen ist.

7. Filtersystem nach einem der vorhergehenden Ansprüche, wobei die Härte des Polyurethanschaums oder des anderen Elastomers derart bemessen ist, dass die Endscheibe die erforderlichen Dichtkräfte aufbringen kann und das Filterelement gut im Gehäuse positionierbar ist.

8. Filtersystem nach einem der vorhergehenden Ansprüche, wobei die erste Endscheibe (11) mit Stütznasen (43, 44) zur Abstützung an dem Gehäusedeckel versehen ist.

## Claims

1. Filter system, comprising
- a filter element, consisting of a zigzag-folded filter medium (10) in concentric shape, a first open or closed end disk (11) disposed on a front face and a second end disk (12) disposed on the opposing front face, the end disk (12) featuring a concentric opening (13) and extending substantially in a circular ring-shaped manner across the folds of the filter medium, the end disk (12) featuring a first ring bead (14) extending axially outwards as well as a sealing groove (16), the ring bead (14) featuring outer end faces (18, 19),
- a housing (26) which is substantially designed concentrically,
- a cover (27) closing the housing (26) and also designed concentrically,
- an inlet (28) disposed on the housing and/or on the cover for supplying the medium to be filtered, in particular air,
an outlet (29) for discharging the filtered medium being provided concentrically on the housing (26),
a sealing contour, which corresponds with the ring bead (14, 15) and the sealing groove (16), being provided on the housing in the area of the outlet (29), the sealing contour consisting of two concentrically extending ring grooves (31, 32) and a sealing web (33) disposed between the two ring grooves, the ring grooves featuring ribs (20, 21) and/or grooves at the groove base and the sealing web (33) featuring on the web upper side and/or on the web side ribs and/or grooves and a height, which is lower than that of the sealing groove (16) of the filter element, the outer end faces (18, 19) of the ring bead (14) being supported by the radially extending ribs (20, 21) of a housing accommodating the filter element or by a flat surface with ducts.

2. Filter system according to claim 1, **characterized in that** the housing in the area of the groove base of the sealing groove (16) features at least one rib (60).

3. Filter system according to claim 1, **characterized in that** the ducts of the accommodating housing are dust ducts to enable the escape of errant dust.

4. Filter system according to one of the above claims, **characterized in that** the end disk (12) is made of polyurethane foam or an elastomer.

5. Filter system according to one of the above claims, **characterized in that** a reinforcement plate (17), which features breakthroughs (22), is provided inside of the end disk.

6. Filter system according to one of the above claims, wherein the reinforcement plate (17) is provided in the outer area with an annular surface (23).

7. Filter system according to one of the above claims, wherein the hardness of the polyurethane foam or of the other elastomer is dimensioned in such a way that the end disk can apply the necessary sealing forces and that the filter element can be well positioned in the housing.

8. Filter system according to one of the above claims, wherein the first end disk (11) is provided with supporting lugs (43, 44) for supporting it on the housing cover.

## Revendications

1. Système de filtre, comprenant
- un élément filtrant comprenant un milieu filtrant (10) concentrique plié en accordéon, un premier disque d'extrémité (11) ouvert ou fermé disposé sur une face frontale et un deuxième disque d'extrémité (12) placé sur la face frontale opposée, le disque d'extrémité (12) comportant une ouverture concentrique (13) et s'étendant essentiellement en forme d'anneau de cercle au-dessus des plis du milieu filtrant, le disque d'extrémité (12) présentant un premier bourrelet annulaire (14) évoluant en sens axial vers l'extérieur et une rainure d'étanchéité (16), le bourrelet annulaire (14) présentant des faces frontales (18, 19) extérieures,
- un boîtier (26) essentiellement conçu de manière concentrique,
- un couvercle (27) obturant le boîtier (26) et également conçu de manière concentrique,
- une entrée (28) placée sur le boîtier et/ou sur le couvercle pour faire entrer le milieu à filtrer, notamment l'air,
une sortie (29) concentrique étant prévue sur le boîtier (26) pour évacuer le milieu filtré,
un contour d'étanchéité étant prévu sur le boîtier à proximité de la sortie (29), ce contour correspondant avec le bourrelet annulaire (14, 15) et avec la rainure d'étanchéité (16), le contour d'étanchéité étant constitué de deux rainures annulaires (31, 32) concentriques et d'une nervure d'étanchéité (33) circulaire placée entre les deux rainures annulaires, les rainures annulaires étant pourvues à leur base de rainures (20, 21) et/ou de nervures et la nervure d'étanchéité (33) présentant sur sa face supérieure et/ou sur son côté des rainures et/ou des nervures et ayant une hauteur inférieure à celle de la rainure d'étanchéité (16) de l'élément filtrant, les faces frontales (18, 19) extérieures du bourrelet annulaire (14) s'appuyant sur des rainures (20, 21) évoluant en sens radial d'un boîtier réceptionnant l'élément filtrant ou sur une surface plane pourvue de canaux.

2. Système de filtre selon la revendication 1, **caractérisé en ce que** le boîtier est doté d'au moins une rainure (60) dans la zone du fond de rainure de la rainure d'étanchéité (16).

3. Système de filtre selon la revendication 1, **caractérisé en ce que** les canaux du boîtier de réception sont des canaux de poussière permettant d'évacuer la poussière qui a été mal dirigée.

4. Système de filtre selon l'une des revendications précédentes, **caractérisé en ce que** le disque d'extrémité (12) est composé d'une mousse polyuréthane ou d'un élastomère.

5. Système de filtre selon l'une des revendications précédentes, **caractérisé en ce qu'**une plaque de renfort (17) présentant des traversées (22) est prévue à l'intérieur du disque d'extrémité.

6. Système de filtre selon l'une des revendications précédentes, la plaque de renfort (17) comportant une surface annulaire (23) dans la zone extérieure.

7. Système de filtre selon l'une des revendications précédentes, la dureté de la mousse polyuréthane ou de l'autre élastomère étant dimensionnée telle que le disque d'extrémité puisse fournir les forces d'étanchéité et que l'élément filtrant puisse être bien positionné dans le boîtier.

8. Système de filtre selon l'une des revendications précédentes, le premier disque d'extrémité (11) étant pourvu d'ergots d'appui (43, 44) servant d'appui sur le couvercle de boîtier.
